# EUROPÄISCHE PATENTSCHRIFT

(11) **EP 1 972 424 B1**
(45) Veröffentlichungstag und Bekanntmachung des Hinweises auf die Patenterteilung: **27.11.2013**
(21) Anmeldenummer: 08004430.8
(22) Anmeldetag: 11.03.2008
(51) Int. Cl.: B29C 65/60, B29C 37/00, B60J 7/185, B29C 45/14

(54) **Verbindung zweier Funktionselemente, nämlich einer Scheibe mit einem Verdeckelement und Verfahren zur Festlegung einer Scheibe an einem Verdeckelement**
Connection for two function elements, namely a disk with a cover element and method for first fixing a disk to a cover element
Liaison de deux éléments de fonctionnement, à savoir d'un disque et d'un élément de capote et procédé de fixation d'un disque sur un élément de capote

(30) Priorität: 21.03.2007 DE 102007013518
(43) Veröffentlichungstag der Anmeldung: 24.09.2008
(73) Patentinhaber: Valmet Automotive Oy, 23500 Uusikaupunki (FI)
(72) Erfinder: Irle, Sabrina, 49565 Bramsche (DE)
(74) Vertreter: Kronthaler, Schmidt & Coll.

(56) Entgegenhaltungen:
- EP-A- 0 959 617
- EP-A- 1 712 342
- DE-A1- 3 109 500
- DE-A1- 19 927 999
- JP-A- 6 080 023

## Beschreibung

Die Erfindung betrifft eine Verbindung zweier Funktionselemente nach Patentanspruch 1 und ein Verfahren zur Festlegung einer Scheibe an einem Verdeckelement eines Cabriolet-Fahrzeugs nach Patentanspruch 9.

Aus der Praxis sind unterschiedlichste Möglichkeiten bekannt, zwei Funktionselemente miteinander zu verbinden, wobei beispielsweise bei Cabriolet-Fahrzeugen Anbauteile mit einer mit Einscheibensicherheitsglas (ESG) oder mit einem Kunststoff ausgebildeten Scheibe durch Verklebung oder Anspritzung der Anbauteile an die Scheibe verbunden werden. Auch ist es bekannt, Schraub- oder Nietverbindungen einzusetzen.

Nachteilhafterweise sind derartige Anbindungsprozesse entweder sehr aufwändig, wie z. B. separate Befestigungsmittel erfordernde Schraub- oder Nietverbindungen, oder sie sind ungenau und fehleranfällig wie Anspritz- oder Klebeverbindungen.

Aus der DE 199 27 999 A1 ist eine Verbindung einer Kunstharz-Fensterscheibe eines Kraftfahrzeugs mit einem Montageelement eines elektrischen Anschlusses bekannt, bei dem ein integral mit der Kunstharz-Fensterscheibe ausgebildeter Kunststoffniet als Anbindungselement dient.

Die DE 31 09 500 A1 beschreibt allgemein ein Verfahren und ein Werkzeug zur plastischen Verformung von durch Druck und Wärme verformbarem Material, wobei zwei Funktionselemente mittels eines Kunststoffniets verbunden werden können.

Aus der EP 0 959 617 A2 ist eine Kunststoffniet-Verbindung bei einem Filmscanner bekannt.

Weiterhin ist es aus der JP 06 080023 A bekannt, zwei Platten aus Kunststoff bei einem zu öffnenden Fahrzeugelement wie einer Fahrzeugtür mittels eines Kunststoffniets zu verbinden.

Keine der aus den oben genannten Druckschriften bekannten Lösungen betrifft ein Verdeck eines Cabriolet-Fahrzeugs und wird den komplexen Anforderungen bei der Gestaltung einer Anbindung einer Heckscheibe an ein Verdeck eines Cabriolets gerecht.

Es ist somit Aufgabe der vorliegenden Erfindung, eine Verbindung zweier Funktionselemente, nämlich einer Scheibe mit einem Verdeckelement, zu schaffen, mittels welcher eine feste und sichere Verbindung der Scheibe mit dem Verdeckelement auf einfache Weise realisierbar ist.

Weiterhin ist es Aufgabe der vorliegenden Erfindung, ein Verfahren zur Verbindung eines Verdeckelements mit einer Scheibe eines Cabriolet-Fahrzeugs zu schaffen, mittels welcher die Festlegung der Scheibe an dem Verdeckelement auf einfache und fehlerresistente Weise realisiert wird.

Diese Aufgabe wird mit der Verbindung zweier Funktionselemente, nämlich einer Scheibe mit einem Verdeckelement, der eingangs genannten Art gemäß den Merkmalen des kennzeichnenden Teils des Patentanspruches 1 und mit einem Verfahren zur Festlegung einer Scheibe an einem Verdeckelement eines Cabriolet-Fahrzeugs gemäß den Merkmalen des kennzeichnenden Teils des Patentanspruches 9 gelöst.

Es ist somit die Verbindung zweier Funktionselemente, nämlich einer Scheibe mit einem Verdeckelement eines Cabriolet-Fahrzeugs, mittels wenigstens eines Niets vorgesehen, welcher als Kunststoffniet einstückig mit einem der Funktionselemente ausgebildet ist. Erfindungsgemäß umfasst das Verdeckelement ein plattenförmiges Anbindungselement, welches als Befestigungselement für einen ein Verdeck des Cabriolet-Fahrzeugs von einer Fahrzeuginnenseite verkleidenden Fahrzeuginnenhimmel ausgebildet ist und wenigstens eine Ausnehmung aufweist, durch die der wenigstens eine Kunststoffniet führbar ist.

Weiterhin ist ein Verfahren zur Festlegung einer Scheibe an einem Verdeckelement eines Cabriolet-Fahrzeugs mittels wenigstens einer Verbindung mit einem Kunststoffniet vorgesehen, bei dem erfindungsgemäß der Kunststoffniet zur Festlegung des Verdeckelements an der Scheibe in seiner Form mittels eines Verformungsprozesses verändert wird. Hierbei können in vorteilhafter Weise reine Wärmeeinleitungsprozesse, Ultraschall-Nietprozesse und weitere geeignete Prozesse zum Einsatz kommen.

Mit der Erfindung ist eine sehr einfache Verbindung zweier Funktionselemente mittels wenigstens eines Kunststoffniets, welcher insbesondere in Form einer Erhebung oder eines Doms ausgebildet ist, realisiert, da eine Positionierung eines separaten Niets durch die feste Anbindung des Kunststoffniets an ein Funktionselement vorteilhafterweise entfällt. Es ist daher zur Verbindung der Funktionselemente nur eine Positionierung der beiden Funktionselemente zueinander nötig.

Durch die erfindungsgemäße Ausführung der Erfindung können vorteilhafterweise Bauteile eingespart werden. Der Fahrzeuginnenhimmel kann somit an die Heckscheibe oder ein Verdeckelement angebunden werden.

Die Scheibe kann als eine Festglasscheibe oder als Kunststoffscheibe ausgebildet sein.

Der wenigstens eine Kunststoffniet kann dabei sowohl mit der Scheibe als auch mit dem Verdeckelement einstückig verbunden sein, wobei zur Herstellung der einstückigen Verbindung des wenigstens einen Kunststoffniets mit einem der Funktionselemente vorteilhafterweise verschiedene Anbindungsarten vorgesehen sein können, so dass eine auf den jeweiligen Anwendungsfall optimierte Verbindung realisiert werden kann.

Der Kunststoffniet kann beispielsweise an eines der Funktionselemente angespritzt oder an eines der Funktionselemente geklebt werden, wobei sich diese Verfahren für eine Anbindung von Kunststoffnieten an eine Festglasscheibe und eine Kunststoffscheibe eignen.

Speziell bei einer Kunststoffscheibe kann es zudem vorgesehen sein, dass der wenigstens eine Kunststoffniet mit der Ausformung der Scheibe integral ausgebildet ist und somit ein separater Verbindungsprozess des Kunststoffniets mit der Scheibe in vorteilhafter Weise entfällt.

In einer einfachen Ausgestaltung der Erfindung ist es vorgesehen, dass der wenigstens eine Kunststoffniet als zylindrischer, insbesondere konisch ausgeformter Körper ausgebildet ist, welcher durch die Ausnehmung an dem korrespondierenden plattenförmigen Anbindungselement des Verdeckelements führbar ist. Ein konisch ausgeformter Kunststoffniet ermöglicht dabei eine in vorteilhafter Weise einfache Führung des Kunststoffniets in die entsprechende Ausnehmung des korrespondierenden Funktionselements, da eine Seitenfläche des konischen Kunststoffniets als eine Einführungsschräge fungiert.

Bei einer vorteilhaften Ausgestaltung der Erfindung kann es vorgesehen sein, dass die wenigstens eine Ausnehmung des das korrespondiere Funktionselement darstellenden Anbindungselements eines Verdeckelements als Langloch ausgebildet ist, wobei das Anbauelement beispielsweise als Stahl-Profil oder als extrudiertes Kunststoffprofil ausgebildet sein kann. Durch die Verwendung eines Langlochs als Ausnehmung können in vorteilhafterweise unterschiedliche Wärmeausdehnungen der beteiligten Materialien kompensiert werden. Selbstverständlich können auch anders geformte Ausnehmungen zum Einsatz kommen.

Eine sehr feste und belastbare Verbindung der Funktionselemente ist realisiert, wenn der Kunststoffniet zur Verbindung der Funktionselemente derart in seiner Form änderbar ist, dass der Kunststoffniet mit dem Funktionselement, mit dem er nicht einstückig verbunden ist, eine Hinterschneidung aufweist.

Mit einem erfindungsgemäßen Verfahren kann ein Verdeckelement auf sehr einfache Weise an einer Scheibe festgelegt werden, wenngleich eine Formänderung des wenigstens einen Kunststoffniets zur Festlegung der Scheibe an dem Verdeckelement auch durch eine andere Verfahrensweise realisiert werden kann, solange der Kunststoffniet bei der Formänderung an die jeweiligen Oberflächen der Scheibe und/oder des Verdeckelements angepasst und eventuelle Unregelmäßigkeiten ausgeglichen werden.

Weitere Vorteile und vorteilhafte Ausführungen einer Verbindung zweier Funktionselemente und eines Verfahrens nach der Erfindung ergeben sich aus den Patentansprüchen, der Zeichnung und der Beschreibung.

Nachfolgend ist ein vorteilhaftes Ausführungsbeispiel einer erfindungsgemäßen Verbindung zweier Funktionselemente und eines Verfahrens zur Verbindung eines Verdeckelements eines Cabriolet-Fahrzeugs mit einer Heckscheibe anhand der Zeichnung prinzipmäßig beschrieben.

Es zeigt:
- Fig. 1: eine vereinfachte Schnittdarstellung einer Verbindung eines Randbereichs einer Heckscheibe eines Cabriolet-Fahrzeugs über einen noch unverformten Kunststoffniet mit einem Anbindungselement eines Verdeckelements;
- Fig. 2: eine vereinfachte Draufsicht auf einen Ausschnitt des Anbindungselements der Fig. 1 mit zwei durch Langlöcher des Anbindungselements geführte, noch unverformte Kunststoffnieten;
- Fig. 3: eine vereinfachte Schnittdarstellung der Verbindung der Fig. 1, wobei der Kunststoffniet zur Befestigung des Anbindungselements abgeflacht ist; und
- Fig. 4: eine vereinfachte Draufsicht auf das Anbindungselement der Fig. 1 bis Fig. 3 mit zwei abgeflachten Kunststoffnieten.

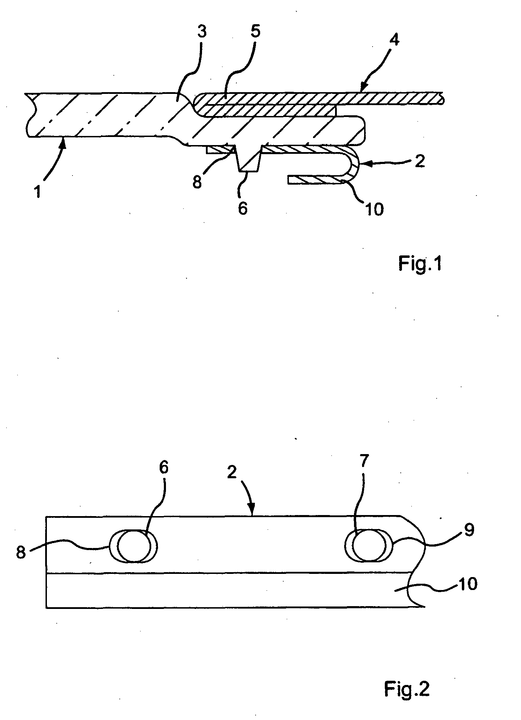

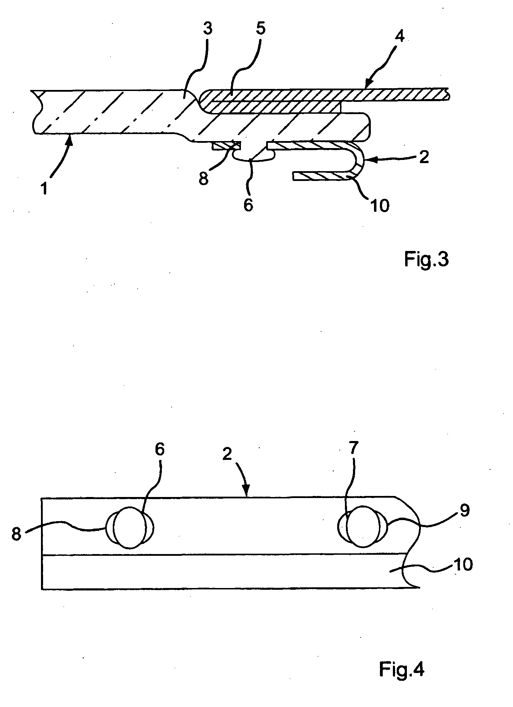

In Fig. 1 und Fig. 3 ist eine Verbindung zweier Funktionselemente gezeigt, wobei ein Funktionselement als Kunststoff-Heckscheibe 1 eines ein Cabriolet-Fahrzeug darstellenden Kraftfahrzeugs und das weitere Funktionselement als U-Profil ausgebildetes plattenförmiges Anbindungselement 2 eines Verdecks ausgebildet ist, wobei das Anbindungselement 2 vorliegend zur Anbindung eines Innenhimmels vorgesehen ist.

Die Kunststoff-Heckscheibe 1 ist vorliegend mit Polycarbonat ausgebildet und weist in einem Bereich des dargestellten Scheibenrands einen S-förmigen Absatz 3 auf, wobei auf der Kunststoff-Heckscheibe 1 in einem scheibenrandseitigen Bereich neben dem S-förmigen Absatz 3 ein Verdeckbezug 4 mit einem Umbug 5 angeordnet ist. Die Oberflächen des Verdeckbezugs 4 und der Kunststoff-Heckscheibe 1 sind dabei fluchtend zueinander angeordnet, so dass die Verbindung der Kunststoff-Heckscheibe 1 mit dem Verdeckbezug 4 eine insbesondere aus Designgründen sehr ansprechende Lösung bietet.

Mit der Ausformung der Kunststoff-Heckscheibe 1 sind mehrere Kunststoffnieten 6, 7, welche in Form von Erhebungen oder Domen ausgebildet sind, integral ausgebildet, von denen vorliegend zwei Kunststoffnieten, welche in Umlaufrichtung des Seitenrandes der Kunststoff-Heckscheibe 1 angeordnet sind, dargestellt sind.

Die einstückig mit der Kunststoff-Heckscheibe 1 verbundenen und somit ebenfalls aus Polycarbonat ausgebildeten Kunststoffnieten 6, 7 sind dabei konisch ausgeformt, wobei die Kunststoffnieten 6, 7 den größten Umfang im Bereich des Übergangs zur Kunststoff-Heckscheibe 1 aufweisen.

Das in der Fig. 2 ausschnittsweise dargestellte Anbindungselement 2 weist zwei in Fig. 2 und Fig. 4 näher gezeigte Ausnehmungen 8, 9 an einem in Einbaulage an der Innenseite des Heckscheibenrandes anliegenden U-Schenkel auf, wobei die Ausnehmungen 8, 9 als Durchtrittsöffnungen für die Kunststoffnieten 6 bzw. 7 in Form von Langlöchern ausgebildet sind.

Der weitere, kürzer ausgebildete U-Schenkel 10 des Anbindungselements 2 ist vorliegend zur Anbindung für einen ein Verdeck eines Cabriolet-Fahrzeugs von der Fahrzeuginnenseite verkleidenden Fahrzeuginnenhimmel vorgesehen.

Zur Verbindung des Anbindungselements 2 mit der Kunststoff-Heckscheibe 1 wird das Anbindungselement 2 mit seinen Ausnehmungen 8, 9 - wie in den Fig. 1 und Fig. 2 gezeigt - über die korresponierenden Kunststoffnieten 6, 7 geführt, so dass die Kunststoffnieten 6, 7 die jeweilige Ausnehmung 8 bzw. 9 durchtreten und mit einem Bereich ihrer Länge über das Anbindungselement 2 bzw. den zur Verbindung vorgesehenen Bereich des Anbindungselements 2 vorragen.

In einem Formänderungsprozess, welcher vorliegend als Ultraschall-Nietprozess ausgeführt wird, werden die Kunststoffnieten 6, 7 zur Festlegung des Anbindungselements 2 an der Kunststoff-Heckscheibe 1 derart in ihrer Form verändert, dass die Kunststoffnieten 6, 7 nach der Formänderung eine in den Fig. 3 und Fig. 4 dargestellte Hinterschneidung mit dem Anbindungselement 2 aufweisen.

Die Kunststoffnieten 6, 7 werden dabei in Richtung der Kunststoff-Heckscheibe 1 derart abgeflacht, dass die Kunststoffnieten 6, 7 in ihrem Umfang vergrößert werden, wobei diese Umfangsvergrößerung die Hinterschneidung zu dem Anbindungselement 2 bildet.

## Patentansprüche

1. Verbindung zweier Funktionselemente, nämlich einer Scheibe (1) mit einem Verdeckelement (2) eines Cabriolet-Fahrzeugs, mittels wenigstens eines Niets (6, 7), welcher als Kunststoffniet (6, 7) einstückig mit einem der Funktionselemente (1, 2) ausgebildet ist, wobei das Verdeckelement ein plattenförmiges Anbindungselement (2) umfasst, welches als Befestigungselement für einen ein Verdeck des Cabriolet-Fahrzeugs von einer Fahrzeuginnenseite verkleidenden Fahrzeuginnenhimmel ausgebildet ist und wenigstens eine Ausnehmung (8, 9) aufweist, durch die der wenigstens eine Kunststoffniet (6, 7) führbar ist.

2. Verbindung nach Anspruch 1,
**dadurch gekennzeichnet,**
**dass** der Kunststoffniet (6, 7) an eines der Funktionselemente (1, 2) angespritzt ist.

3. Verbindung nach Anspruch 1,
**dadurch gekennzeichnet,**
**dass** der Kunststoffniet (6, 7) an eines der Funktionselemente (1, 2) angeklebt ist.

4. Verbindung nach einem der Ansprüche 1 bis 3,
**dadurch gekennzeichnet,**
**dass** eines der Funktionselemente als eine Scheibe aus Glas ausgebildet ist.

5. Verbindung nach Anspruch 1,
**dadurch gekennzeichnet,**
**dass** die Scheibe (1) aus Kunststoff ausgebildet ist, wobei der Kunststoffniet (6, 7) mit der Ausformung der
Scheibe (1) integral ausgebildet ist.

6. Verbindung nach einem der Ansprüche 1 bis 5,
**dadurch gekennzeichnet,**
**dass** der wenigstens eine Kunststoffniet (6, 7) als zylindrischer, insbesondere konisch ausgeformter Körper ausgebildet ist.

7. Verbindung nach Anspruch 1,
**dadurch gekennzeichnet,**
**dass** die wenigstens eine Ausnehmung (8, 9) des Anbindungselements (2) als Langloch ausgebildet ist.

8. Verbindung nach einem der Ansprüche 1 bis 7,
**dadurch gekennzeichnet,**
**dass** der Kunststoffniet (6, 7) zur Verbindung der Funktionselemente (1, 2) derart in seiner Form änderbar ist, dass der Kunststoffniet (6, 7) mit dem Funktionselement (2), mit dem er nicht einstückig verbunden ist, eine Hinterschneidung aufweist.

9. Verfahren zur Festlegung einer Scheibe (1) an einem Verdeckelement (2) eines Cabriolet-Fahrzeugs mittels einer Verbindung nach einem der Ansprüche 1 bis 8 mit wenigstens einem Kunststoffniet (6, 7), wobei
der Kunststoffniet (6, 7) zur Festlegung des Verdeckelements (2) an der Scheibe (1) in seiner Form verändert wird, wobei die Formänderung des Kunststoffniets (6, 7) mittels eines Verformungsprozesses durchgeführt wird.

10. Verfahren nach Anspruch 9,
**dadurch gekennzeichnet,**
**dass** der Verformungsprozess als Ultraschall-Nietprozess ausgebildet ist.

## Claims

1. A connection of two functional elements, namely a window pane (1) and a hood element (2) of a convertible vehicle, by means of at least one rivet (6, 7), which is provided as a plastic rivet (6, 7) integrally with one of said functional elements (1, 2), said hood element comprising a plate-shaped connecting element (2), which is provided as a fastening element for an inside roof lining which lines a hood of the convertible vehicle from the inside of the vehicle, said plate-shaped connecting element (2) comprising at least one recess (8, 9) through which said at least one plastic rivet (6, 7) can be guided.

2. The connection according to claim 1, **characterised in that** the plastic rivet (6, 7) is injection-moulded onto one of the functional elements (1, 2).

3. The connection according to claim 1, **characterised in that** that the plastic rivet (6, 7) is glued to one of the functional elements (1, 2).

4. The connection according to any one of claims 1 to 3, **characterised in that** one of the functional elements is provided as a glass window pane.

5. The connection according to claim 1, **characterised in that** the window pane (1) is made from a plastic material, with the plastic rivet (6, 7) being formed integrally with the window pane (1).

6. The connection according to any one of claims 1 to 5, **characterised in that** the at least one plastic rivet (6, 7) is provided as a cylindrical, in particular conical, body.

7. The connection according to claim 1, **characterised in that** the at least one recess (8, 9) of the connecting element (2) is provided as an oblong hole.

8. The connection according to any one of claims 1 to 7, **characterised in that** the shape of the plastic rivet (6, 7) for connecting the functional elements (1, 2) can be changed such that the plastic rivet (6, 7) and the functional element (2), with which it is not integrally connected, have an undercut.

9. A method for fixing a window pane (1) to a hood element (2) of a convertible vehicle by means of a connection according to any one of claims 1 to 8 with at least one plastic rivet (6, 7),
wherein
the shape of the plastic rivet (6, 7) is changed in order to fix the hood element (2) to the window pane (1), the change in the shape of the plastic rivet (6, 7) being carried out by means of a deformation process.

10. The method according to claim 9, **characterised in that** the deformation process is provided as an ultrasonic riveting process.

## Revendications

1. Liaison de deux éléments de fonctionnement, à savoir une vitre (1) et un élément de capote (2) d'un véhicule cabriolet, au moyen d'au moins un rivet (6, 7), qui est réalisé sous forme d'un rivet en matière plastique (6, 7) et d'un seul tenant avec l'un desdits éléments de fonctionnement (1, 2), ledit élément de capote comprenant un élément de liaison (2) en forme de plaque, qui est réalisé en tant qu'élément de fixation pour un habillage de plafond recouvrant une capote du véhicule cabriolet par l'intérieur du véhicule, ledit élément de liaison (2) comprenant au moins un évidement (8, 9) à travers lequel on peut guider ledit au moins un rivet en matière plastique (6, 7).

2. Liaison selon la revendication 1, **caractérisée en ce que** le rivet en matière plastique (6, 7) est surmoulé sur l'un des éléments de fonctionnement (1, 2).

3. Liaison selon la revendication 1, **caractérisée en ce que** le rivet en matière plastique (6, 7) est collé sur l'un des éléments de fonctionnement (1, 2).

4. Liaison selon l'une quelconque des revendications 1 à 3, **caractérisée en ce que** l'un des éléments de fonctionnement est réalisé sous forme d'une vitre en verre.

5. Liaison selon la revendication 1, **caractérisée en ce que** la vitre (1) est réalisée en matière plastique et ledit rivet en matière plastique (6, 7) est réalisé intégralement lors de la réalisation de ladite vitre (1).

6. Liaison selon l'une quelconque des revendications 1 à 5, **caractérisée en ce que** ledit au moins un rivet en matière plastique (6, 7) est réalisé sous forme d'un corps cylindrique, notamment conique.

7. Liaison selon la revendication 1, **caractérisée en ce que** ledit au moins un évidement (8, 9) de l'élément de liaison (2) est réalisé sous forme d'un trou oblong.

8. Liaison selon l'une quelconque des revendications 1 à 7, **caractérisée en ce que** l'on peut changer la forme du rivet en matière plastique (6, 7) pour la liaison des éléments de fonctionnement (1, 2) de manière à ce que le rivet en matière plastique (6, 7) et l'élément de fonctionnement (2), avec lequel il n'est pas relié d'un seul tenant, présentent une contre-dépouille.

9. Procédé de fixation d'une vitre (1) sur un élément de capote (2) d'un véhicule cabriolet au moyen d'une liaison selon l'une quelconque des revendications 1 à 8 avec au moins un rivet en matière plastique (6, 7), dans lequel
on change la forme du rivet en matière plastique (6, 7) afin de fixer l'élément de capote (2) sur la vitre (1), ledit changement de forme du rivet en matière plastique (6, 7) étant réalisé au moyen d'un procédé de déformation.

10. Procédé selon la revendication 9, **caractérisé en ce que** le procédé de déformation est un procédé de rivetage ultrasonique.
